# EUROPEAN PATENT SPECIFICATION

(11) **EP 3 219 680 B1**
(45) Date of publication and mention of the grant of the patent: **10.05.2023**
(21) Application number: 14870104.8
(22) Date of filing: 25.09.2014
(51) Int. Cl.: C02F 9/08, C02F 1/463, C10L 5/14, C10L 5/36, C10L 5/42, A01C 3/00, C02F 101/16, C02F 101/32

(54) **MANURE TREATMENT METHOD**
VERFAHREN ZUR BEHANDLUNG VON GÜLLE
PROCÉDÉ DE TRAITEMENT DE LISIERS

(30) Priority: 13.12.2013 ES 201331823
(43) Date of publication of application: 20.09.2017
(73) Proprietor: Inversiones De Las Cinco Villas 2008, S.L., 50600 Ejea de los Caballeros (Zaragoza) (ES)
(72) Inventor: ZARRALANGA PETRÍZ, José Luis, E-50600 Ejea de los Caballeros (Zaragoza) (ES); PLOU CEAMANOS, Marta Cristina, E-50600 Ejea de los Caballeros (Zaragoza) (ES); TOBARUELA DELGADO, Ignacio, E-50600 Ejea de los Caballeros (Zaragoza) (ES)
(74) Representative: López Martínez, José Antonio
(86) International application number: PCT/ES2014/070721
(87) International publication number: WO 2015/086869

(56) References cited:
- EP-A1- 0 963 969
- EP-A1- 1 995 221
- ES-A1- 2 171 111
- ES-A1- 2 395 664
- KR-A- 20130 134 275
- US-A1- 2010 199 514
- US-A1- 2013 180 857
- RIAÑO B ET AL: "On-farm treatment of swine manure based on solid-liquid separation and biological nitrification-denitrification of the liquid", JOURNAL OF ENVIRONMENTAL MANAGEMENT, ELSEVIER, AMSTERDAM, NL, vol. 132, 27 November 2013 (2013-11-27), pages 87-93, XP028670985, ISSN: 0301-4797, DOI: 10.1016/J.JENVMAN.2013.10.014
- ANGULO ARAMBURU J.: 'The digestión anaerobia in the tratamiento of efluentes of granjas of porcino.' INGENIERÍA QUÍMICA no. 409, 2004, pages 102 - 108, XP009500142
- FLOTATS X. ET AL.: 'The proceso of secado of purines in the marco of una gestión integral of residuos ganaderos.' RESIDUOS: REVISTA TÉCNICA. vol. 53, March 2000, pages 40 - 46, XP055349947

## Description

### TECHNICAL FIELD

The invention falls within the technical sector of manure treatment, for the recovery of waste from farms in the agricultural and farming industry.

### STATE OF THE ART

The possibility of using manure as organic fertilizer is a benefit for the livestock and for agricultural lands. A problem arises in areas with a high concentration of farms, where there is no sufficient surface of land that allows the manure to be valued as fertilizer or adequate valorisation of manure as fertilizer.

For zones with high livestock concentration complementary procedures to anaerobic bio-digestion are known, intended to improve Nitrogen management of digestate, among which solid-liquid separation and treatment of elimination or reduction-recovery are included. However, the presence of high concentrations of heavy metals and residues of medication, especially antibiotics, which act as harmful agents, causes dramatic decrease in the activity of methaniferous, denitrifying and nitrifying bacteria.

All this leads to an environmental impact of products obtained from bio-digestion procedures that is higher than expected.

The management of manure, emissions from agricultural soils after application of manure to field, management of co-substrates, generation and combustion of biogas, composting of the solid part of the final product or application of digestate to the soil, continue to release significant quantities of CH₄, N₂O and NOx that are considered greenhouse gases (GHG), and other gaseous pollutants, specially NH₃, which are also causing other impacts such as bad odours or respiratory problems and allergies.

Currently described systems and treatments are focused on obtaining organic fertilizers from wastewater for different purposes. It is true that these systems reduce the polluting load of agricultural and livestock residual by application of oxidation techniques (electro-oxidation, ozone, hydrogen peroxide) or electro-deionization with a significant energy consumption, or by evaporation whereby a part of dissolved gases escapes without control to atmosphere maintaining significant emission levels if additional recovery systems are not included.

Patent application ES 2395664 A1 describes a system of elimination of pig farm manure impurities, using electrooxidation with resulting water, producing compost or fertilizer for land. The electrooxidation system mentioned in this patent application is supplemented by a zeolite-active carbon filter and reverse osmosis filter to remove salts and other impurities from the liquid. The procedure comprises a flocculation step comprising the dosing of a cationic flocculant of "low ionicity" and a high molecular weight. However, the system of this application is not eliminating CO₂-equivalent emissions originating from methanation of carbon in the solid fraction used as organic fertilizer and is also not eliminating NOₓ-emissions originating from nitrogenous compounds existing in both the solid fraction and the liquid, which is used as irrigation water enriched with mentioned nitrogenous compounds. To overcome these drawbacks, the present application proposes the use of cationic flocculants presented in aqueous dispersion or in the form of granular powder of "very low cationicity" and high molecular weight, and therefore lower overall activity, suitable for electrocoagulation higher performance than the electrooxidation described in the publication.

WO 2006134453 A1 describes the manufacturing of fertilizer by subjecting manure to electrolysis and ozonation.

This treatment does not avoid methanation of the organic fraction of the manure and therefore does not reduce the emission of CO₂ associated with such methanation. The same occurs with nitrogen fraction, which is present in the obtained fertilizer, because the treatment does not reduce GHG emissions of nitrogenous base generated during treatment or after deposition in the agricultural area.

There are processes in the art which are limited to biological and thermal treatment, ammonia gas removal process and other systems for absorption or desorption. Other documents in the prior art describe the addition of chemicals causing chemical but not electro-chemical reactions, including the addition of cellulose and other materials, or treatments exclusively for the liquid fraction of manure by suggesting evaporation or reverse osmosis.

All of them allow to obtain fertilizers that preserve the greatest possible amount of nutrients, meanwhile, the present invention eliminates the nitrogenous and organic nutrients and reduces GHG emissions and GHG precursors.

US2010199514 discloses an optimized apparatus and method for manure management comprising all the steps of the preamble of claim 1.

KR20130134275, discloses a high calory livestock excretion briquette using livestock excretion having water content not greater than 20% or livestock excretion sludge, and a manufacturing method thereof. Odor generated by livestock excretion or livestock excretion sludge can be effectively removed by using livestock excretion or livestock excretion sludge having water content not greater than 30%. Livestock excretion briquette is manufactured by adding at least one solid fuel selected from wood chip fuel (WCF), tire derived fuel (TDF), wood chip fuel (WCF), refuse derived fuel (RDF), and coal for increasing calory in pellet, small chip, and powder form, has a strength that it can manufacture livestock excretion briquette having excellent high calory.

### DESCRIPTION OF THE INVENTION

The invention is a procedure of manure treatment, which comprises: the physical solid-liquid separation of a liquid effluent containing manure, to generate a solid and a liquid fraction ; the physical-chemical separation of the liquid fraction obtained in the previous stage to obtain a new solid and liquid fractions, by coagulation and subsequent flocculation of the solid particles obtained; the electrocoagulation of the liquid fraction obtained in the previous stage to obtain an additional solid fraction and a liquid fraction; and the pelletizing of the solid fractions obtained in all of the above stages in the presence of lignocellulosic materials.

The final liquid fraction has very low content of nitrogenous compounds, GHG generators or precursors, and residues of dissolved organic matter, phosphorus and another inorganic pollutants as heavy metals, etc; and especially also organic contaminants such as microbial or fungal fauna and flora, the remains of medication and organic matter in general. In this way is obtained treated effluent with greatly reduced pollutant load and lower environmental impact.

In a preferred embodiment the method of this invention comprises a prior step of adding water to the effluent.

Each of the stages is developed as follows:
Conditioning: The effluent or waste is conditioned to achieve sufficient dissolution of the watersoluble elements and compounds. If the effluent does not have enough humidity to allow or facilitate its transfer, sufficient water shall be added. To prevent stratification that normally occurs during storage of such substances in deposits due to the different densities of the components that conform it, it is often necessary to carry out a process of homogenization mechanics by means of an agitator.

Physical separation solid liquid: The solids are removed in liquid manure to generate two different fractions, the solid and the liquid one. The solid fraction has more elevated density than original dejection. The liquid fraction will contain all the dissolved nitrogenous elements, both salts and gases.

At this stage, a significant humidity reduction of solid fraction up to the values from 25% to 40% in separated solid is reached.

The solid fraction is conveyed to the next point of treatment and conditioning of solid, while the liquid fraction is directed to a stage of physical-chemical separation.

Physical-chemical separation of solid-liquid : The liquid fraction obtained in previous stage goes to treatment tank of flocculation-coagulation. The coagulation and flocculation are two steps withing the water clarification stage. Both make up one single stage in which the particles agglomerate into floccules that then precipitate.

According to the invention, during the flocculation cationic additives are added having a cationicity from 1% to 30%, and molecular weight 10 10⁶ Da to 1.000 10⁶ Da In the scope of present invention, the coagulation is the process of destabilization of the suspended particles so that the separation forces between them are reduced.

According to the invention, a dissolved air flotation system is used.

The sludges accumulated on the surface are continuously extracted through a collector or cavitation, which consists in taking advantage of depression produced in impulse of the diffuser that is submerged in the liquid to be treated. As this depression zone is attached by pipes to atmosphere, a pressure difference is created which aspires air as microbubbles that are distributed throughout the liquid mass.

To produce an effective flocculation, it is possible to add cationic flocculant products which are in aqueous dispersion or in granular powder form. They must be of very low cationicity and high molecular weight. Special preference will be given to cationic polyacrylamides.

Sludge accumulated on the surface is removed by the collector and is brought to a bandpass filter or similar system to proceed to pressing. Later it is discharged along with the sludge obtained in the previous phase and with the same use as this.

The fluid obtained is conveyed to a complete system of electrocoagulation suitable for receiving additives that improve the flocculation and coagulation process.

Electrocoagulation-flotation treatment: The continuous electrocoagulation system allows for elimination of organic and nitrogenous load, reduction of odours and colour, elimination of pathogens and microorganisms, heavy metals reduction, of oil and fat emulsion, reduction of suspended materials, with high performance, lower sludge generation of mud and at the lower cost.

The electrocoagulation is an electrochemical process where the ions, coagulants, Al³⁺ or Fe^{(2+/3+)} are generated by electrical current through sacrificial anodes, forming clots/floccule that are floated in the same system due to the micro-oxygen and hydrogen bubbles formed during electrolysis. In the same process there are destabilization reactions, precipitation, emulsion breakage, oxidation, reduction, and molecular breakage. The use of flocculants as additives increases the efficiency of treatment.

In a preferred embodiment of the procedure of this invention mentioned electrocoagulation is performed in presence of ions Al³⁺ or Fe ^{(2+/3+)}.

Electrocoagulation-flotation allows to treat the water very efficiently and with very little production of sludge (between 30%-70% lower than a physical-chemical treatment) with the following pollutants:
- suspended solids and colloids
- oils, fats, hydrocarbons, emulsions
- heavy metals
- hardness reducers
- coagulable organic matter
- large molecules (molecular breakdown)
- toxic materials
- odorous and colourful substances
- total nitrogen and phosphorus
- bacteria, virus, and parasites to be eliminated.

Again, microbubbles adhere to the suspended solids and fats present in the wastewater. A collector extracts the solid particles from the water. Surface sludge is removed with the collector and driven to the solids' treatment and processing place.

At this stage, the presence of nitrogenous contaminants must have been reduced in the liquid fraction in the following approximate proportions:

| Compound | Initial sample | Final sample | Reduction |
|---|---|---|---|
| Nitrate | 11,7mg/l | 2,6mg/l | 77,78% |
| Nitrite | 21,0mg/l | 12,0mg/l | 42,86% |
| Nitrogen TKN | 1,118,9mg/l | 59,1mg/l | 94,72% |

The resulting liquid is redirected to the equipment of solid-liquid chemical-physical separation to repeat the process of coagulation and flocculation. The solids are decanted sludge or supernatant are sent to pelletize to obtain biomass fuel or, if moisture is excessive, to solid-liquid physical separator.

The continuous electrocoagulation system removes organic and nitrogenous load, and pathogenic microorganisms, reduces odour as well as emulsification of oils and fats, and reduces materials in suspension. All this with high performance, less generation of sludge and at a lower cost than the processes described in the technique.

The total solid fraction obtained is rich in organic matter and therefore in carbon compounds. It represents a fuel with reduced humidity. In the present invention it is conditioned in a pellet for its mixing with other combustible biomasses, using for this purpose widely available techniques.

The use of solid biomass as a fuel after conditioning of solids and sludge removal ensures a reduction of methane emissions that would have been generated in conventional manure management, or by any other type of treatment process such as bio-digestion or composting. The method of the present invention manages to reduce the environmental impact of manure and other effluents and waste of similar composition, both of livestock origin, such as agricultural or from transformation processes.

In general terms, the elimination of viruses, bacteria, parasites, a reduction of 99% heavy metals, a reduction of methane carbon 100% and nitrogen reduction 80%, can be achieved, as represented in the following chart:

**Per cubic meter/year of fresh manure**

| | |
|---|---|
| Total Solids (TS) in raw manure | 6,30% |
| Raw manure solid fraction t/year | 0,063 |
| Raw manure liquid fraction t/year | 0,937 |
| Nitrogen in raw manure | 0,60% |
| Nitrogen in raw manure t/year | 0,006 |
| Solid fraction humidity (separator) | 63,79% |
| Separator performance (solids/total) | 60% |
| Solid fraction of separated manure t/year | 0,038 |
| Humidity of solid fraction of separated manure t/year | 0,896 |
| Liquid fraction for treatment F/Q t/year | 0,067 |
| Nitrogen in solid fraction of separated manure (dry matter) | 1,52% |
| Nitrogen in solid fraction of separated manure t/year | 0,001 |
| Nitrogen in liquid fraction of separated manure | 0,61% |
| Nitrogen in liquid fraction of separated manure t/year | 0,005 |

At the pig exploitation, as example one of the present patent application, reductions of precursors of greenhouse gases represent a drastic reduction in emissions of greenhouse gases, superior to 95% against technique commonly used consisting in the application of slurry on agricultural land.

Using calculation methodology for assessing emissions proposed by the Spanish Office of Climate Change for greenhouse gas emissions from intensive livestock facilities, expressed in tons of CO₂ equivalent, the following chart of annual emissions is obtained:

| | | **Emissions from the base scenario** | **Emissions from the Usual methodology disclosed** |
|---|---|---|---|
| **Process** | | **(t CO2-eq)** | **(t CO2-eq)** |
| Manure management at the farm | CH4 | 6,224 | 0 |
| Manure management at the farm | N2O | 358 | 0 |
| Use in crops - Direct | N2O | 1093 | 177 |
| Use in crops - Indirect | N2O | 1046 | 150 |
| Wastes | CH4 | 6.224 | 0 |
| Wastes | CH4 | 0 | 0 |
| TOTAL | | 8,721 | 327 |

### BRIEF DESCRIPTION OF THE FIGURES

Figure 1:
- 1.: Effluent
- 2.: Conditioning.
- 3.: Physical separation solids and liquids
- 4.: Physical-chemical solids and liquids by flocculation-coagulation
- 5.: Treatment of electrocoagulation-flotation
- 6.: Treated liquid storage
- 7.: Conditioning of solids and sludge as biomass
- 8.: Additives

### DETAILED DESCRIPTION OF INVENTION'S EMBODIMENTS

In order to show illustratively the present invention, although not restrictively, some examples are given. The norms and rules indicated are available and known for the person skilled in the art and represent the value of most used standards in the measures methods that are listed.

### Example 1: Treatment of pig manure

The fresh average composition of pig manure is:

| Parameter | Units | Minimum | Maximum | Average |
|---|---|---|---|---|
| Total solids (TS) | g/kg | 13.7 | 169 | 63 |
| DQO | g/kg | 8.15 | 191 | 73 |
| Total Nitrogen (NTK) | g/kg | 2 | 10.25 | 6 |
| Ammoniacal nitrogen | g/kg | 1.65 | 8 | 4,6 |
| Organic nitrogen | g/kg | 0.40 | 3.7 | 1,5 |
| Phosphorus (P) | g/kg | 0.09 | 6,6 | 1,4 |
| Potassium (K) | g/kg | 1,61 | 7,8 | 4,9 |
| Copper (Cu) | mg/kg | 9 | 200 | 40 |
| Zinc (Zn) | mg/kg | 7 | 130 | 70 |

Waste was conditioned in form of a total dilution of the elements and soluble in water compounds by means of a mechanical agitation. Then, solids were separated from liquid droppings in order to produce two different fractions: liquid and solid. The resulting solid fractions had the following properties and composition:

| | | |
|---|---|---|
| Humidity | 63,79 | %m/m |
| Ashes | 23,33 | %m/mmax |
| Carbon-C | 39,87 | %m/mmax |
| Hydrogen-H | 4,78 | %m/mmax |
| Sulphur-S | 0,30 | %m/mmax |
| Oxygen-O | 30,00 | %m/mmax |
| Nitrogen-N | 1,52 | %m/mmax |
| Chlorine-Cl | 0,20 | %m/mmax |
| Sodium-Na | 0,23 | %m/mmax |
| Potassium-K | 0,50 | %m/mmax |

### Calorific powers

| | |
|---|---|
| PCS* Dry basis | 3.520 kcal/kg |
| PCS Wet basis | 1.275 kcal/kg |
| PCI** Dry basis | 2.314 kcal/kg |
| PCI Wet basis | 818 kcal/kg |

| | |
|---|---|
| *PCS High calorific value **PCI Low calorific value | |

The liquid fraction contained all nitrate dissolved elements, both salts and gasses, and was introduced into a treatment tank of flocculation-coagulation. The accumulated sludges on the surface were extracted continuously by a collector. Also, the pressure difference created by the turbine impulse that was submerged in the liquid, sucked air microbubbles that were distributed throughout the liquid mass. In order to produce an efficient flocculation, cationic polyacrylamide (DR 2200 and XT343, Derypol) as a flocculant with few cations and of high molecular weight. Sludges on the surfaces were removed using the collector and passed to a band filter for their pressing. Subsequently they were dumped together the sludges derived from the previous phase and with the same use. The liquid obtained was transported to a complete electrocoagulation system. The microbubbles were again attached to the suspended solids and fats presenting in the wastewater. Those sludges that were formed on the surface were removed by the collector and transported to the treatment and solid conditioning point. At this stage, the presence of nitrogenous contaminants in the liquid fraction was reduced in the following proportions:

| Compound | Initial sample | Final sample | Reduction |
|---|---|---|---|
| Nitrate | 11,7 mg/l | 2,6 mg/l | 77,78% |
| Nitrite | 21,0 mg/l | 12,0 mg/l | 42,86% |
| Nitrogen TKN | 1,118,9 mg/l | 59,1 mg/l | 94,72% |

The obtained liquid was then conveyed to the physical-chemical separation solid-liquid, equipment where the process of coagulation and flocculation was repeated. The decanted and supernatant solids and sludges were pelleted in order to get biomass fuels. The resulting liquid effluent had the following features and composition

| Parameter | Unit | Value |
|---|---|---|
| DQO | mg/l O2 | 1.010 |
| Total Nitrogen (NTK) | mg/l | 434.3 |
| Phosphorus (P) | mg/l | 2.11 |
| Potassium (K) | mg/l | 404 |
| Copper(Cu) | mg/l | 0.28 |
| Zinc (Zn) | mg/l | 2.67 |

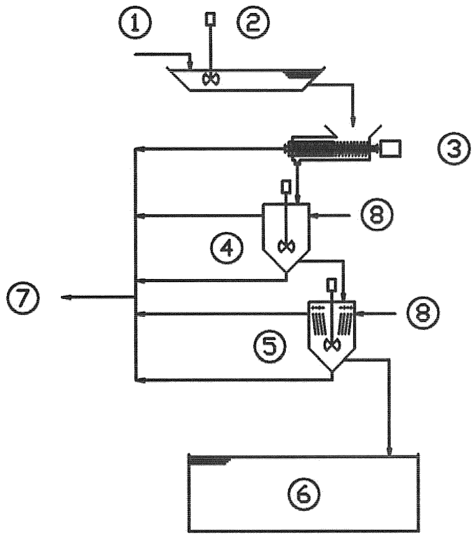

## Claims

1. Process for treatment of manure, comprising following steps:
(A) solid-liquid physical separation (3) of a liquid effluent (1) containing manure, to generate a solid and a liquid fraction;
(B) physical-chemical separation of the liquid fraction obtained in step (A), to obtain a solid and a liquid fraction, wherein said physical-chemical separation (4) comprises a flocculation and coagulation process whereby the particles present in the liquid fraction of step (A) agglomerate and then precipitate, to obtain a solid and a liquid fraction;
(C) electrocoagulation-flotation (5) of the liquid fraction obtained in step (B), to obtain a solid and a liquid fraction; and
(D) pelletizing the solids fractions obtained in steps (A) and (B) and (C), **characterized in that**:
step (B) comprises
a flocculation process with the inclusion of cationic flocculant additives of cationicity between 1% and 30%, and molecular weight of 10 10⁶ Da to 1000 10⁶ Da, obtaining a solid and liquid fraction; and
a coagulation step which is operated with a dissolved air flotation system including a turbine diffuser submerged in the liquid to be treated that suck the air micro bubbles that were distributed through the liquid mass;
step (B) is performed in a treatment tank of flocculation-coagulation;
the liquid obtained in step (C) is re-routed to step (B); and
step (D) of pelletizing the solid fractions obtained in steps (A), (B) and (C) is carried out in the presence of lignocellulosic materials, wherein said solid fraction of step (B) comprises sludge accumulated on the surface that is removed by a collector and brought to a bandpass filter or similar system to proceed to pressing, to be discharged with the same use as the solid fractions obtained in the previous step.

2. The process, according to claim 1 which comprises a conditioning step previous to step (A) in
which water is added to the effluent introduced into step (A) to provide enough humidity facilitating its transfer and a process of homogenization by means of an agitator is performed to prevent stratification.

3. The process according to claim 1, wherein said step (C) electro-coagulation is carried out in the presence of Al 3 +ions or Fe (2+ /3+) ions.

4. The process according to claim 1, wherein said cationic flocculant additives comprises polyacrylamides.

## Patentansprüche

1. Verfahren zur Behandlung von Gülle, umfassend die folgenden Schritte:
(A) physikalische Fest-Flüssig-Trennung (3) eines Gülle enthaltenden flüssigen Abwassers (1), um eine feste und eine flüssige Fraktion zu erzeugen;
(B) physikalisch-chemische Trennung der in Schritt (A) erhaltenen flüssigen Fraktion, um eine feste und eine flüssige Fraktion zu erhalten, wobei die physikalisch-chemische Trennung (4) ein Flockungs- und Koagulationsverfahren umfasst, wobei die in der flüssigen Fraktion von Schritt (A) vorhandenen Partikel agglomerieren und dann ausfallen, um eine feste und eine flüssige Fraktion zu erhalten;
(C) Elektrokoagulation-Flotation (5) der in Schritt (B) erhaltenen flüssigen Fraktion, um eine feste und eine flüssige Fraktion zu erhalten; und
(D) Pelletieren der in den Schritten (A) und (B) und (C) erhaltenen Feststofffraktionen,
**dadurch gekennzeichnet, dass**:
Schritt (B) Folgendes umfasst
ein Flockungsverfahren unter Einbeziehung kationischer Flockungsmittelzusätze mit einer Kationizität zwischen 1 % und 30 % und einem Molekulargewicht von 10 10⁶ Da bis 1000 10⁶ Da, wodurch eine feste und flüssige Fraktion erhalten wird; und
einen Koagulationsschritt, der mit einer Flotationsanlage für gelöste Luft einschließlich einer Turbine betrieben wird;
einen in die zu behandelnde Flüssigkeit eingetauchten Diffusor, der die Luftmikroblasen ansaugt, die durch die flüssige Masse verteilt wurden;
Schritt (B) in einem Behandlungsbecken mit Flockungs-Koagulation durchgeführt wird; die in Schritt (C) erhaltene Flüssigkeit zu Schritt (B) umgeleitet wird; und
Schritt (D) des Pelletierens der in den Schritten (A), (B) und (C) erhaltenen Feststofffraktionen in Gegenwart von lignocellulosehaltigen Materialien durchgeführt wird,
wobei die Feststofffraktion von Schritt (B) Schlamm umfasst, der sich auf der Oberfläche angesammelt hat, die durch einen Abscheider entfernt und zu einem Bandpassfilter oder einem ähnlichen System gebracht wird, um zum Pressen überzugehen, um mit der gleichen Verwendung wie die Feststofffraktionen, die im vorherigen Schritt erhalten wurden, ausgetragen zu werden.

2. . Das Verfahren nach Anspruch 1, das einen Konditionierungsschritt vor Schritt (A) umfasst, bei dem dem in Schritt (A) eingeleiteten Abwasser Wasser zugesetzt wird, um für ausreichend Feuchtigkeit zu sorgen, die den Transfer erleichtert, und ein Homogenisierungsprozess mit Hilfe eines Rührwerks durchgeführt wird, um eine Schichtung zu verhindern.

3. . Das Verfahren nach Anspruch 1, wobei die Elektrokoagulation in Schritt (C) in Gegenwart von A1 3 + -Ionen oder Fe (2+ /3+) -Ionen durchgeführt wird,

4. . Das Verfahren nach Anspruch 1, wobei die kationischen Flockungsmittelzusätze Polyacrylamide umfassen.

## Revendications

1. Procédé de traitement de fumier comprenant les étapes suivantes :
(A) séparation physique solide-liquide (3) d'un effluent liquide (1) contenant du fumier, pour générer une fraction solide et une fraction liquide ;
(B) séparation physico-chimique de la fraction liquide obtenue à l'étape (A), pour obtenir une fraction solide et une fraction liquide, dans laquelle ladite séparation physico-chimique (4) comprend un procédé de floculation et de coagulation dans lequel les particules présentes dans la fraction liquide de l'étape (A) s'agglomèrent puis précipitent, pour obtenir une fraction solide et une fraction liquide ;
(C) électrocoagulation-flottation (5) de la fraction liquide obtenue à l'étape (B), pour obtenir une fraction solide et une fraction liquide ; et
(D) granulation les fractions solides obtenues dans les étapes (A) et (B) et (C),
**caractérisé en ce que** :
l'étape (B) comprend
un procédé de floculation avec inclusion d'additifs floculants cationiques de cationicité comprise entre 1 % et 30 %, et de poids moléculaire compris entre 10 106 Da et 1000 10⁶ Da, permettant d'obtenir une fraction solide et liquide ; et
une étape de coagulation qui est mise en oeuvre avec un système de flottation à air dissous comprenant une turbine
un diffuseur immergé dans le liquide à traiter qui aspire les microbulles d'air qui ont été réparties à travers la masse liquide ;
l'étape (B) est réalisée dans une cuve de traitement de floculation-coagulation ; le liquide obtenu à l'étape (C) est réacheminé à l'étape (B) ; et
une étape (D) de pastillage des fractions solides obtenues aux étapes (A), (B) et (C) est réalisée en présence de matériaux lignocellulosiques,
ladite fraction solide de l'étape (B) comprenant des boues accumulées sur la surface qui sont éliminées par un collecteur et amenées à un filtre passe-bande ou un système similaire pour procéder à un pressage, pour être déchargées avec la même utilisation que les fractions solides obtenues à l'étape précédente.

2. Procédé selon la revendication 1, qui comprend une étape de conditionnement précédant l'étape (A) dans laquelle de l'eau est ajoutée à l'effluent introduit dans l'étape (A) pour fournir suffisamment d'humidité facilitant son transfert et un processus d'homogénéisation au moyen d'un agitateur est effectué pour empêcher la stratification.

3. Procédé selon la revendication 1, dans lequel ladite étape (C) d'électrocoagulation est effectuée en présence d'ions A1 3 + ou d'ions Fe (2+/3+).

4. Procédé selon la revendication 1, dans lequel lesdits additifs floculants cationiques comprennent des polyacrylamides.
